# EUROPÄISCHE PATENTSCHRIFT

(11) **EP 3 281 248 B1**
(45) Veröffentlichungstag und Bekanntmachung des Hinweises auf die Patenterteilung: **23.12.2020**
(21) Anmeldenummer: 16712883.4
(22) Anmeldetag: 30.03.2016
(51) Int. Cl.: H01Q 1/12, H01Q 9/04

(54) **ANTENNENSCHEIBE**
ANTENNA DISC
DISQUE D'ANTENNE

(30) Priorität: 08.04.2015 EP 15162764
(43) Veröffentlichungstag der Anmeldung: 14.02.2018
(73) Patentinhaber: SAINT-GOBAIN GLASS FRANCE, 92400 Courbevoie (FR)
(72) Erfinder: DROSTE, Stefan, 52134 Herzogenrath (DE); STELLING, Bernd, 33647 Bielefeld (DE); FRANCOIS, Guillaume, 52064 Aachen (DE)
(74) Vertreter: Obermair, Christian Egbert
(86) Internationale Anmeldenummer: PCT/EP2016/056975
(87) Internationale Veröffentlichungsnummer: WO 2016/162252

(56) Entgegenhaltungen:
- EP-A1- 1 624 527
- WO-A1-2009/099427
- DE-A1- 19 605 999
- US-A- 5 363 114
- US-A1- 2006 139 223
- US-A1- 2007 216 589

## Beschreibung

Die Erfindung betrifft eine Antennenscheibe, ein Verfahren zur Herstellung der Antennenscheibe und deren Verwendung.

In modernen Fahrzeugen ist oftmals ein System zur Navigation mit Hilfe des globalen Navigationssatellitensystems (GNSS) integriert. In Betrieb befindliche Systeme sind beispielsweise das Global Positioning System (GPS) oder das GLObal Navigation Satellite System (GLONASS). Die dazu notwendigen Antennen können an der Karosserie und damit außerhalb des Fahrzeuginnenraums angeordnet werden, wie beispielsweise aus der US 20140176374 A1 bekannt ist. Derartige Antennen verlieren an Attraktivität, da sie das ästhetische Erscheinungsbild des Fahrzeugs beeinträchtigen, Windgeräusche verursachen können und empfindlich gegenüber Beschädigungen und Vandalismus sind.

Alternativ können GNSS-Antennen innerhalb des Fahrzeuginnenraums angeordnet werden, beispielsweise unterhalb des Armaturenbretts oder unterhalb der Windschutzscheibe. Dabei ist es schwierig eine geeignete Position mit guter Sicht der Antenne auf die GNSS-Satelliten zu finden und gleichzeitig EMC-Probleme durch elektrische Geräte im Armaturenbrett und durch den Fahrzeugmotor zu vermeiden. Des Weiteren können elektrisch leitfähige Schichten wie infrarotreflektierende Schichten oder Low-E-Schichten die Transmission elektromagnetischer Strahlung durch die Scheibe verhindern und das GNSS-Signal blockieren.

Typische GNSS-Antennen werden als plane Antennen und typischerweise als Patch-Antennen realisiert und sind beispielsweise aus der DE 202006011919 U1 bekannt. Dabei wird eine plane, metallische Antennenstruktur auf einer Seite eines keramischen Träger angeordnet. Auf der gegenüberliegenden Seite wird eine plane, metallische Grundplatte als Massefläche angeordnet. Antennenstruktur und Grundplatte werden über elektrische Leitungen mit einer elektrischen Empfangseinheit verbunden. Aufgrund der Materialstärke des keramischen Trägers weist die Antenne eine große Dicke auf und wird üblicherweise in einem Gehäuse auf dem Armaturenbrett montiert. Eine Mikrostreifen-Patch-Antenne zum Senden und/oder Empfangen von zirkular polarisierten Hochfrequenzsignalen ist aus US 2007216589 A1 bekannt.

Die Aufgabe der vorliegenden Erfindung besteht darin, eine verbesserte Antennenscheibe bereitzustellen, in der eine Antenne und insbesondere eine GNSS-Antenne einfach und kostengünstig integriert werden kann.

Die Aufgabe der vorliegenden Erfindung wird erfindungsgemäß durch eine Antennenscheibe gemäß dem unabhängigen Anspruch 1 gelöst. Bevorzugte Ausführungen gehen aus den Unteransprüchen hervor.

Die erfindungsgemäße Antennenscheibe umfasst mindestens die folgenden Merkmale:
- eine Innenscheibe mit einer innenseitigen Oberfläche (IV),
- eine Antennenstruktur, hergestellt aus einer elektrisch leitfähigen Paste, die auf der innenseitigen Oberfläche (IV) der Innenscheibe aufgedruckt und eingebrannt ist,
- ein dielektrisches Trägerelement, das über eine außenseitige Oberfläche (V) mit der innenseitigen Oberfläche (IV) der Innenscheibe verbunden ist, bevorzugt durch Kleben, und auf einer innenseitigen Oberfläche (VI) des Trägerelements eine elektrisch leitfähige Grundplatte aufweist,
   wobei
- die Grundplatte zumindest im Bereich der orthogonalen Projektion der Antennenstruktur bezüglich der Innenscheibe angeordnet ist.

Die erfindungsgemäße Antennenscheibe umfasst eine Antennenstruktur aus einer auf der innenseitigen Oberfläche der Innenscheibe eingebrannten, elektrisch leitfähigen Paste. Die Antennenscheibe zeichnet sich durch die durch Aufdrucken und Einbrennen einer elektrisch leitfähigen Paste hergestellte Antennenstruktur strukturell aus. Die auf diese Weise hergestellte Antennenstruktur unterscheidet sich eindeutig von in anderer Weise hergestellten Antennenstrukturen und kann an der erfindungsgemäßen Antennenscheibe in einfacher Weise identifiziert werden.

Der besondere Vorteil der Erfindung liegt darin, dass eine Innenscheibe oder Verbundscheibe mit einer Antennenstruktur aus einer elektrisch leitfähigen, fest auf die Scheibenoberfläche eingebrannten Paste als erstem Zwischenprodukt hergestellt werden kann. Die Antennenstruktur ist handhabungsstabil und lagerungsstabil an der Scheibe befestigt. Die Antenne wird zum Ende des Herstellungsverfahrens oder erst am späteren Verwendungsort dadurch komplettiert, dass ein Trägerelement mit einer elektrisch leitfähigen Grundplatte an der dafür vorgesehenen Stelle über der Antennenstruktur befestigt wird. Dies erfolgt besonders einfach durch Kleben des Trägerelements auf die Scheibe. Durch geeignete dielektrische Eigenschaften des Trägerelements und den durch das Trägerelement festgelegten Abstand zwischen Antennenstruktur und Grundplatte wird eine Antennenanordnung erzielt, die reproduzierbar sehr gute Empfangs- und Sendeeigenschaften aufweist. Gleichzeitig kann das Trägerelement sehr dünn ausgebildet werden, so dass die an der Scheibe befindliche Anordnung ästhetisch wenig auffällig und gut kaschierbar ist. Das Trägerelement kann zum Beispiel in sehr einfacher Weise in eine Haltevorrichtung oder in eine Abdeckung für ein Kamera- oder Sensorsystem integriert werden und ist dann optisch sehr unauffällig und von der Innenseite nicht sichtbar.

Für die Antennenfunktion ist es wichtig, dass sich über das Dielektrikum zwischen Antennenstruktur und Grundplatte ein im Wesentlichen homogenes elektrisches Feld ausbilden kann. Deshalb ist die Grundplatte bevorzugt plattenförmig ausgebildet, beispielsweise als Folie oder Schicht, und weist bevorzugt eine konstante Dicke auf. In einer alternativen Ausgestaltung ist zumindest die der Antennenstruktur zugewandte Seite der Grundplatte plan, wobei die der Antennenstruktur abgewandte Seite eine beliebige Form aufweisen kann. Beispielsweise können auf der der Antennenstruktur abgewandten Seite eine Kontaktzunge oder andere Kontaktierungs- und Befestigungselemente angeordnet sein. In einer vorteilhaften Ausgestaltung der erfindungsgemäßen Antennenscheibe sind die Antennenstruktur und die Grundplatte im Wesentlichen parallel zu einander angeordnet. Im Rahmen der Erfindung wird unter einer planen Antennenstruktur oder Grundplatte eine Struktur verstanden, die im Wesentlichen in einer Ebene angeordnet ist, aber dennoch einer leichten Krümmung einer Scheibenoberfläche folgt, wobei die Höhenänderung in Bezug auf die laterale Ausdehnung gering ist.

Die erfindungsgemäße Grundplatte dient bevorzugt als Massefläche, das heißt sie ist mit einer elektrischen Bezugsmasse, beispielsweise der Bezugsmasse einer Sende- oder Empfangselektronik und insbesondere mit der Bezugsmasse eines Fahrzeugs, verbindbar.

Ein weiterer Aspekt der Erfindung umfasst eine Antennenverbundscheibe, die mindestens eine erfindungsgemäße Antennenscheibe enthält, wobei eine außenseitige Oberfläche (III) der Innenscheibe über mindestens eine Zwischenschicht mit einer innenseitigen Oberfläche (II) einer Außenscheibe verbunden ist.

Die erfindungsgemäße Antennenscheibe ist zur Abtrennung eines Innenraums, beispielsweise eines Fahrzeuginnenraums, von einer äußeren Umgebung geeignet. Im der äußeren Umgebung (kurz Außenraum) befindet sich regelmäßig die Signalquelle der Antennen der Antennenscheibe beziehungsweise eine Empfangseinheit, die Signale der Antenne der Antennenscheibe empfangen kann. Wird die Antennenscheibe für die Satellitennavigation genutzt, befinden sich die Satelliten im Außenraum. Dadurch werden die jeweiligen Oberflächen der Antennenscheibe definiert: innenseitige Oberfläche (II,IV,VI) bedeutet, dass sie dem Innenraum zugewandt sind, und außenseitige Oberfläche (I,III,V) bedeutet, dass sie dem Innenraum abgewandt sind. Im Falle einer Verwendung für die Satellitennavigation ist die außenseitige Oberfläche (I,III,V) somit die der Satelliten-Signalquelle zugewandte Seite.

Durch die erfindungsgemäße Anordnung von Antennenstruktur und Grundplatte ist die Antennenstruktur unmittelbar einer Signalquelle zugewandt, beispielsweise einem GNSS-Satelliten. Die Grundplatte ist auf der bezüglich der Signalquelle abgewandten Seite der Antennenstruktur angeordnet.

Als Innenscheibe und gegebenenfalls Außenscheibe sind im Grunde alle elektrisch isolierenden Substrate geeignet, die unter den Bedingungen der Herstellung und der Verwendung der erfindungsgemäßen Antennenscheibe thermisch und chemisch stabil sowie dimensionsstabil sind.

Die Innenscheibe und/oder die Außenscheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die Innenscheibe und/oder die Außenscheibe sind bevorzugt transparent, insbesondere für die Verwendung der Antennenscheibe in einem Fahrzeug, beispielsweise als Windschutzscheide oder Rückscheibe, oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Fahrzeugantennenscheiben, die nicht im verkehrsrelevanten Sichtfeld des Fahrers liegen, beispielsweise für Dachscheiben, kann die Transmission aber auch viel geringer sein, beispielsweise größer als oder gleich 5 %.

Die Dicke von Innenscheibe und/oder Außenscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas verwendet. Die Größe der Innenscheibe und/oder der Außenscheibe kann breit variieren und richtet sich nach der Größe der erfindungsgemäßen Verwendung. Die Innenscheibe und/oder die Außenscheibe weisen beispielsweise im Fahrzeugbau übliche Flächen von 200 cm² bis zu 3 m² auf.

Die Antennenscheibe beziehungsweise die Antennenverbundscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Innenscheibe und die Außenscheibe plan oder leicht oder stark in einer Richtung oder in mehreren Richtungen des Raumes gebogen. Insbesondere werden plane Scheiben verwendet. Die Scheiben können farblos oder gefärbt sein.

Die Innenscheibe und/oder die Außenscheibe weisen bevorzugt eine relative Permittivität ε_{r,1/2} von 2 bis 8 und besonders bevorzugt von 6 bis 8 auf. Bei derartigen relativen Permittivitäten konnten besonders gute Empfangs- und Sendeeigenschaften der Antenne erzielt werden.

Bei einer Antennenverbundscheibe werden die Innenscheibe und die Außenscheibe durch mindestens eine Zwischenschicht miteinander verbunden. Die Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und / oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander oder nebeneinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die Innenscheibe und die Außenscheibe und eventuelle weitere Zwischenschichten miteinander verkleben.

Die Zwischenschicht hat bevorzugt eine relative Permittivität ε_{r,3} von 2 bis 4 und besonders bevorzugt von 2,1 bis 2,9. Bei derartigen relativen Permittivitäten konnten besonders gute Antenneneigenschaften erzielt werden.

Das dielektrische Trägerelement weist eine außenseitige Oberfläche (V) und eine innenseitige Oberfläche (IV) auf, wobei die Begriffe außenseitig und innenseitig bezüglich einer späteren Montage der Antennenscheibe zur Abtrennung eines Innenraums definiert sind.

Das erfindungsgemäße Trägerelement weist auf seiner innenseitigen Oberfläche (VI) eine elektrisch leitfähige Grundplatte auf. Das erfindungsgemäße Trägerelement ist über seine außenseitige Oberfläche (V) mit der innenseitigen Oberfläche (IV) der Innenscheibe verbunden. Das Trägerelement ist bevorzugt auf die Innenscheibe aufgeklebt. Die Verklebung kann sich über die gesamte Kontaktfläche zwischen Trägerelement und Innenscheibe erstrecken. In einer vorteilhaften Ausgestaltung der Erfindung ist der Klebstoff der Verklebung in einem Bereich angeordnet, der sich nicht unmittelbar zwischen Antennenstruktur und Trägerelement befindet, sondern in einem die Antennenstruktur umgebenden Bereich. Dies hat den besonderen Vorteil, dass kein Kleber zwischen Antennenstruktur und Grundplatte angeordnet ist und die Antenneneigenschaften sich dadurch präziser und reproduzierbarer einstellen lassen.

Das dielektrische Trägerelement ist vorteilhafterweise derart ausgebildet, dass es die Antennenstruktur und die Grundplatte auf einem festen Abstand zueinander hält, wobei der Abstand bevorzugt über den gesamten Bereich zwischen Antennenstruktur und Grundplatte konstant ist und die Antennenstruktur parallel zur Grundplatte angeordnet ist. Dazu kann das Trägerelement ein Vollmaterial sein, bevorzugt eine Platte aus Vollmaterial, oder Hohlräume, Ausnehmungen oder materialfreie Bereiche aufweisen. Das Trägerelement kann bei einer hinreichend dicken, freitragenden Grundplatte auch nur rahmenförmig ausgebildet sein.

Das dielektrische Trägerelement ist vorteilhafterweise zumindest im Bereich zwischen Antennenstruktur und Grundplatte plattenförmig ausgebildet und weist eine konstante Materialstärke (Dicke) auf.

Die Dicke des Trägerelements beträgt vorteilhafterweise von 0,5 mm bis 10 mm und besonders bevorzugt von 1 mm bis 4 mm. Derartige Dicken sind besonders vorteilhaft, da sich einerseits gute Antenneneigenschaften damit erzielen lassen und gleichzeitig, die an der Innenscheibe angebrachte Anordnung aus Trägerelement und Grundplatte nur wenig sichtbar ist. Des Weiteren lässt sich diese Anordnung gut in eine Abdeckung wie eine Kamera- oder Sensorabdeckung integrieren.

In einer vorteilhaften Ausgestaltung der erfindungsgemäßen Antennenscheibe enthält das Trägerelement einen Kunststoff, bevorzugt Polycarbonat, Acrylnitril-Butadien-Styrol-Copolymerisat (ABS), Polyethylen (PE), Polypropylen (PP), Polyvinylchlorid (PVC), Polystyrol (PS), Polybutylenterephthalat (PBT), Polyamid oder Polyethylenterephthalat (PET) oder besteht daraus.

Das Trägerelement weist dann bevorzugt eine relative Permittivität von 2 bis 4 und besonders bevorzugt von 2,7 bis 3,3 auf. Derartige Permittivitäten sind besonders vorteilhaft, da sich damit besonders gute Antenneneigenschaften erzielen lassen, insbesondere mit den zuvor genannten Dicken des Trägerelements.

In einer besonders vorteilhaften Ausgestaltung der erfindungsgemäßen Antennenscheibe ist das Trägerelement ein Bereich einer Abdeckung, insbesondere einer Kamera- oder Sensorabdeckung. Das Trägerelement kann dabei auch ein Bereich einer Haltevorrichtung (Bracket) sein, die auf die Innenscheibe geklebt ist. An der Haltevorrichtung kann eine Abdeckung, insbesondere eine Kamera- oder Sensorabdeckung, befestigt sein. Die Befestigung kann beispielsweise durch Verkleben, Verschmelzen, Verschrauben, Vernieten oder durch Verrasten mittels einer Snap-In-Verbindung erfolgen.

In allen Fällen ist die Grundplatte zumindest im Bereich der orthogonalen Projektion der Antennenstruktur bezüglich der Innenscheibe angeordnet. Das bedeutet, dass beim Blick durch die Antennenscheibe von der der Signalquelle des Antennensignals abgewandten Seite, also mit Blick auf die innenseitige Oberfläche (IV) der Antennenscheibe, nur die Grundplatte sichtbar ist und die Grundplatte die Sicht auf die Antennenstruktur vollständig verdeckt.

In einer vorteilhaften Ausgestaltung der Erfindung ist die Fläche der Grundplatte größer als die Fläche der Antennenstruktur, bevorzugt um mindestens 10% größer und besonders bevorzugt um mindestens 25% größer. In einer weiteren vorteilhaften Ausgestaltung der Erfindung überragt die Grundplatte in der orthogonalen Projektion der Antennenstruktur den Umriss der Antennenstruktur um jeweils mindestens 2 mm, bevorzugt um mindestens 5 mm und insbesondere um mindestens 10 mm.

Die Antennenstruktur weist eine Grundfläche mit einem Verhältnis von Länge l_{A} zu Breite b_{A} von 1:1 bis 10:1, bevorzugt von 1:1 bis 2:1 und besonders bevorzugt von 1:1 bis 1,1:1 auf. Die Grundfläche der Antennenstruktur ist bevorzugt ein Rechteck, ein Quadrat, ein Trapez, eine Vieleck mit mehr als vier Ecken, eine Ellipse oder ein Kreis. Im Falle eines Rechtecks entspricht die Länge l_{A} der Länge der längeren Seite des Rechtecks und die Breite b_{A} der Länge der kürzeren Seite des Rechtecks. Im Falle einer quadratischen oder im Wesentlichen quadratischen Grundfläche mit gleich großen Seitenlängen weisen die Länge l_{A} und die Breite b_{A} folglich ein Verhältnis von 1:1 auf. Im Falle einer nicht rechteckigen und insbesondere einer elliptischen Struktur wird die Länge l_{A} durch die maximale Länge der Struktur und die Breite b_{A} durch die Länge der zur Länge l_{A} orthogonal verlaufenden Richtung festgelegt. Im Falle einer kreisförmigen Grundfläche weisen die Länge l_{A} und die Breite b_{A} ein Verhältnis von 1:1 auf.

Insbesondere bei rechteckigen oder quadratischen Grundflächen können im Rahmen der vorliegenden Erfindung eine, bevorzugt zwei diagonal einander gegenüberliegende Ecken, und besonders bevorzugt alle Ecken, abgeschrägt sein. Damit lässt sich die Antennenstruktur in vorteilhafter Weise auf die zu empfangende elektromagnetische Strahlung abstimmen. Die Abschrägung beträgt vorteilhafterweise weniger als 20% der Länge l_{A} und/oder der Breite b_{A}, bevorzugt weniger als 10%.

Die Abmessungen der Antennenstruktur sind im Allgemeinen von dem gewünschten Frequenzband und der jeweiligen Verwendung abhängig. Für Mobilfunkanwendungen im Frequenzbereich von 0,8 GHz bis 2,7 GHz weist die Antennenstruktur typischerweise eine Länge l_{A} und/oder eine Breite b_{A} von 20 mm bis 60 mm auf. Für Anwendungen zur satellitengestützten Navigation (GNSS) im Frequenzbereich von 1,2 GHz bis 1,7 GHz weist die Antennenstruktur typischerweise eine Länge l_{A} und/oder eine Breite b_{A} von 30 mm bis 40 mm auf.

In einer vorteilhaften Ausgestaltung der Erfindung ist die Antennenstruktur auf ein GPS-Signal mit einer Frequenz von 1575,42 MHz und einer rechts-zirkular-polarisierten elektromagnetischen Schwingungsebene optimiert. Dazu weist die Antennenstruktur eine rechteckige Grundfläche mit einer Länge l_{A} von 36 mm und einer Breite b_{A} von 34 mm und folglich einem Verhältnis von etwa 1,06:1 auf.

Die Antennenstruktur kann vorteilhafterweise weitere Ausnehmungen aufweisen. Besonders vorteilhaft ist dabei eine schlitzförmige Ausnehmung. Bei einer rechteckförmigen oder quadratischen Grundfläche der Antennenstruktur ist die längere Seite der schlitzförmigen Ausnehmung bevorzugt parallel zu und insbesondere entlang der Diagonalen der Grundfläche ausgerichtet. Die schlitzförmige Ausnehmung hat beispielsweise eine rechteckige Form, vorteilhafterweise mit einer Länge l_{S} von 5 mm bis 20 mm, bevorzugt von 7,5 mm bis 12,5 mm und einer Breite b_{S} von 0,5 mm bis 5,0 mm, bevorzugt von 0,9 mm bis 3,1 mm.

Des Weiteren kann die Antennenstruktur rechteckförmige Ausnehmungen aufweisen, die an beiden Seiten der elektrischen Leitungsverbindung zwischen Antennenstruktur und Signalleitung in der Grundfläche der Antennenstruktur angeordnet sind. Diese rechteckförmigen Ausnehmungen haben den besonderen Vorteil, dass sie eine besonders gute Ein- oder Auskopplung des Antennensignals in oder aus der Antennenstruktur ermöglichen. Das Antennensignal kann dann über die Signalleitung einer Sende- oder Empfangselektronik zugeführt werden.

Die erfindungsgemäße Antennenstruktur besteht aus einer gedruckten und eingebrannten elektrisch leitfähigen Paste, bevorzugt eine silberhaltige Siebdruckpaste. In einer vorteilhaften Ausgestaltung der Erfindung besteht die Grundplatte ebenfalls aus einer gedruckten und eingebrannten elektrisch leitfähigen Paste, bevorzugt eine silberhaltige Siebdruckpaste. Eine vorteilhafte erfindungsgemäße gedruckte Antennenstruktur und/oder Grundplatte weist eine Dicke von 3 µm bis 20 µm und/oder einen Flächenwiderstand von 0,001 Ohm/Quadrat bis 0,03 Ohm/Quadrat, bevorzugt von 0,002 Ohm/Quadrat bis 0,018 Ohm/Quadrat, auf. Derartige Antennenstrukturen und Grundplatten sind im industriellen Fertigungsprozess leicht zu integrieren und kostengünstig herzustellen.

In einer weiteren vorteilhaften Ausgestaltung der Erfindung besteht die Grundplatte aus einer elektrisch leitfähigen Folie, bevorzugt einer Metallfolie und insbesondere einer Kupfer-, Silber-, Gold- oder Aluminiumfolie. Die elektrisch leitfähige Folie weist vorteilhafterweise eine Dicke von 50 µm bis 1000 µm und bevorzugt von 100 µm bis 600 µm auf. Die elektrisch leitfähige Folie hat vorteilhafterweise eine Leitfähigkeit von 1*10⁶ S/m bis 10*10⁷ S/m und bevorzugt von 3,5*10⁷ S/m bis 6,5*10⁷ S/m.

Es versteht sich, dass derartige Folien bevorzugt auf dem Trägerelement aufgeklebt sind, beispielsweise mittels eins dünnen Klebstofffilms oder eines doppelseitigen Klebebands. Derart ausgestaltete Grundplatten sind besonders vorteilhaft, da die Grundplatte mit Trägerelement aus einer Einheit hergestellt werden kann und während der Fertigung bequem und positionsgenau auf die Innenscheibe geklebt werden kann.

In einer vorteilhaften Ausgestaltung der erfindungsgemäßen Antennenscheibe sind die Antennenstruktur und die Grundplatte am äußeren Rand der Scheibe angeordnet. Dabei beträgt der maximale Abstand zum äußeren Rand bevorzugt weniger als 20 cm, besonders bevorzugt weniger als 10 cm. Dies erlaubt es die Antennenstruktur, die Grundplatte und Zuleitungen unter einem optisch unauffälligen Schwarzdruck zu verdecken oder mit einer Abdeckung, beispielsweise einem Sensor- oder Kameragehäuse, zu kaschieren.

In der erfindungsgemäßen Antennenscheibe ist der Antennenfußpunkt der Antennenstruktur über einen Flachleiter zum Rand des Trägerelements und um diesen herum auf die innenseitige Oberfläche (IV) des Trägerelements geführt. Alternativ kann der Flachleiter durch eine Öffnung im Trägerelement auf dessen innenseitige Oberfläche (IV) geführt werden. Dabei ist der Flachleiter bevorzugt als Streifenleiter und bevorzugt als koplanarer Streifenleiter ausgebildet, dessen Signalleitung mit der Antennenstruktur elektrisch leitend gekoppelt ist und dessen Schirmung mit der Grundplatte elektrisch leitend gekoppelt ist. Elektrisch leitend gekoppelt bedeutet hier bevorzugt galvanisch gekoppelt. Die Signalleitung ist dabei bevorzugt durch Klemmen mit der Antennenstruktur verbunden, wobei die Klemmung durch das auf die Innenscheibe geklebte Trägerelement erzeugt wird, wobei ein Ende der Signalleitung des Streifenleiters über einen Presskontakt mit der Antennenstruktur verbunden ist. Alternativ kann die Signalleitung kapazitiv mit der Antennenstruktur gekoppelt sein.

In einer weiteren vorteilhaften Ausgestaltung der erfindungsgemäßen Antennenscheibe ist die Grundplatte und die Schirmung des Streifenleiters einstückig ausgebildet sind. Dies vermeidet Leitungsverluste bei Übergängen zwischen verschiedenen Abschnitten der Antenne. Des Weiteren ist eine solche einstückige Struktur besonders einfach herzustellen, wenn die jeweiligen Elemente auf einer gemeinsamen Trägerfolie angeordnet sind. Die einstückige Struktur ist bevorzugt um einen Seitenrand des Trägerelements herumgeführt und mit dem Trägerelement verklebt.

Der Streifenleiter ist bevorzugt als Folienleiter oder flexibler Folienleiter (Flachleiter, Flachbandleiter) ausgebildet. Unter Folienleiter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Erfindungsgemäß geeignete Folienleiter, weisen lediglich eine Gesamtdicke von beispielsweise 0,3 mm auf. Derart dünne Folienleiter können ohne Schwierigkeiten zwischen der Innenscheibe und dem Trägerelement angeordnet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten. Die elektrische Leitungsverbindung zwischen der Antennenstruktur und Signalleitung und/oder der Grundplatte und der Massenzuleitung beziehungsweise Schirmung erfolgt bevorzugt über elektrisch leitfähige Kleber oder über eine Lotverbindung, die beide eine sichere und dauerhaft elektrische Leitungsverbindung zwischen Anschlussbereich und Zuleitung ermöglichen. Alternativ kann die elektrische Leitungsverbindung auch durch Klemmen erfolgen, da die Klemmverbindung durch Verkleben des Trägerelements mit der Innenscheibe fixiert wird. Alternativ kann die elektrische Leitungsverbindung auch durch Löten hergestellt werden, insbesondere zwischen Grundplatte und Schirmung.

In einer Ausgestaltung einer nicht erfindungsgemäßen Antennenscheibe weist die Grundplatte einen Massebereich und einen kapazitiven Kopplungsbereich zur kapazitiven Auskopplung des Antennensignals auf. Der kapazitive Kopplungsbereich kann hochfrequenztechnisch hochohmig mit der Grundplatte verbunden sein oder bevorzugt von dieser elektrisch isoliert sein. Das Antennensignal wird kapazitiv mit einem kapazitiven Kopplungsbereich in der Ebene der Grundplatte über das dielektrische Trägerelement gekoppelt. Der kapazitive Kopplungsbereich ist dann mit einem Bereich der Signalleitung des Folienleiters verbunden oder mit diesem einstückig ausgebildet. Die ist besonders vorteilhaft, da die Signalleitung für das Antennensignal und die Massezuleitung beziehungsweise Schirmung auf einer Ebene mit einem einzigen Streifenleiter in einfacher Weise hergestellt werden können. Die Antennenstruktur zwischen Innenscheibe und Trägerelement muss nicht gesondert kontaktiert werden und es muss kein gesonderter Leiter zwischen Trägerelement und Innenscheibe herausgeführt werden, so dass das Trägerelement besonders flach auf der Innenscheibe anliegt.

In einer weiteren vorteilhaften Ausgestaltung der erfindungsgemäßen Antennenscheibe ist der Flachleiter und/oder die Grundplatte auf einer Trägerfolie angeordnet. Die Trägerfolie enthält bevorzugt ein Polymer und enthält besonders bevorzugt Polyimid oder Polyethylenterephthalat (PET) oder besteht daraus. Die Trägerfolie weist eine relative Permittivität von 2 bis 4 und besonders bevorzugt von 2,7 bis 3,3 auf.

Ein weiterer Aspekt der Erfindung betrifft eine Antennenscheibenanordnung, die mindestens umfasst:
- eine erfindungsgemäße Antennenscheibe oder eine erfindungsgemäße Antennenverbundscheibe
- eine Empfangs- oder Sendeelektronik, die mit der Antennenstruktur und der Grundplatte elektrisch gekoppelt ist,
wobei die Antennenscheibe oder die Antennenverbundscheibe als Verglasung in einer Fahrzeugkarosserie eines Fahrzeugs angeordnet ist.

Die Grundplatte dient bevorzugt als Massefläche, wobei die Grundplatte in diesem Fall mit einer elektrischen Bezugsmasse des Fahrzeugs verbunden ist.

Die oben beschriebenen, verschiedenen Ausgestaltungen und Ausführungsformen der erfindungsgemäßen Antennenscheibe können in Alleinstellung oder in beliebiger Kombination realisiert sein.

Ein weiterer Aspekt der Erfindung umfasst ein Verfahren zur Herstellung einer Antennenscheibe, insbesondere einer wie oben beschrieben ausgebildeten, erfindungsgemäßen Antennenscheibe, wobei mindestens:
(a) eine Antennenstruktur aus einer elektrisch leitfähigen Paste, bevorzugt einer silberhaltigen Siebedruckpaste, auf die innenseitige Oberfläche (IV) einer Innenscheibe aufgedruckt und eingebrannt wird,
(b) ein dielektrisches Trägerelement über eine außenseitige Oberfläche (V) mit der innenseitigen Oberfläche (IV) der Innenscheibe verbunden wird, wobei eine auf der innenseitigen Oberfläche (VI) angeordnete elektrisch leitfähige Grundplatte zumindest im Bereich der orthogonalen Projektion der Antennenstruktur bezüglich der Innenscheibe angeordnet wird.

In einer vorteilhaften Ausführungsform des erfindungsgemäßen Verfahrens wird das Trägerelement durch Verkleben mit einem Klebestoff mit der Innenscheibe verbunden. Der Klebstoff besteht bevorzugt aus ein-komponentigen oder zwei- (oder mehr-) komponentigen Klebestoffsystemen. Besonders bevorzugt sind Acrylatklebstoffe, Methylmethacrylatklebstoffe, Cyanacrylatklebstoffe, Phenol-Formaldehydharz-Klebstoffe, Epoxidharz-Klebstoffe, Polyurethan-Klebstoffe (PUR), Silikonklebstoffe und/oder Silanvernetzende-Polymerklebstoffe, Gemische und/oder Copolymere davon.

Ein weiterer Aspekt der Erfindung umfasst ein Verfahren zur Herstellung einer Antennenverbundscheibe, wobei mindestens:
(a) eine Antennenstruktur aus einer elektrisch leitfähigen Paste, bevorzugt einer silberhaltigen Siebedruckpaste, auf die innenseitige Oberfläche (IV) einer Innenscheibe aufgedruckt und eingebrannt wird,
(b) eine Stapelfolge aus der Innenscheibe, mindestens einer Zwischenschicht und einer Außenscheibe erzeugt wird und die Stapelfolge zu einer Verbundscheibe laminiert wird,
(c) ein dielektrisches Trägerelement über eine außenseitige Oberfläche (V) mit der innenseitigen Oberfläche (IV) der Innenscheibe verbunden wird, wobei eine auf der innenseitigen Oberfläche (VI) angeordnete elektrisch leitfähige Grundplatte zumindest im Bereich der orthogonalen Projektion der Antennenstruktur bezüglich der Innenscheibe angeordnet wird.

Das Laminieren, also das Verbinden von Innenscheibe und Außenscheibe über die Zwischenschicht in Verfahrensschritt (b) erfolgt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die Innenscheibe, die thermoplastische Zwischenschicht und die Außenscheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Innenscheibe und die Außenscheibe innerhalb von beispielsweise etwa 60 Minuten bei verminderten Drücken von 0,01 mbar bis 800 mbar und Temperaturen von 80°C bis 170°C laminiert werden.

Ein weiterer Aspekt der Erfindung umfasst die Verwendung der erfindungsgemäßen Antennenscheibe oder der erfindungsgemäßen Antennenverbundscheibe in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe, in Möbeln oder in Gebäuden.

Die Erfindung umfasst weiter die Verwendung der erfindungsgemäßen Antennenscheibe oder der erfindungsgemäßen Antennenverbundscheibe zum Empfang von GNSS-Signalen zur satellitengestützten Navigation, insbesondere eines rechts-zirkular polarisierten GPS-Signals mit einer L1-Frequenz von 1575,42 MHz und/oder eines GLONASS-Signals mit einer Frequenz von 1602 MHz ± 4 Mhz.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1A: eine Draufsicht auf eine Ausgestaltung einer erfindungsgemäßen Antennenverbundscheibe,
- Figur 1B: eine vergrößerte Darstellung des Ausschnitts Z aus Figur 1A,
- Figur 1C: eine Querschnittsdarstellung entlang der Schnittlinie A-A' aus Figur 1B,
- Figur 1D: eine Querschnittsdarstellung entlang der Schnittlinie B-B' aus Figur 1B,
- Figur 1E: eine Querschnittsdarstellung entlang der Schnittlinie C-C' aus Figur 1B,
- Figur 2: eine schematische Darstellung einer erfindungsgemäßen Antennenscheibe zur satellitengestützen Navigation in einem Fahrzeug,
- Figur 3A: eine Draufsicht auf eine Ausgestaltung einer nicht erfindungsgemäßen Antennenverbundscheibe,
- Figur 3B: eine vergrößerte Darstellung des Ausschnitts Z aus Figur 3A,
- Figur 3C: eine Querschnittsdarstellung entlang der Schnittlinie A-A' aus Figur 3B,
- Figur 3D: eine Querschnittsdarstellung entlang der Schnittlinie B-B' aus Figur 3B,
- Figur 4A: eine Draufsicht auf eine weitere alternative Ausgestaltung einer erfindungsgemäßen Antennenscheibe,
- Figur 4B: eine vergrößerte Darstellung des Ausschnitts Z aus Figur 4A,
- Figur 5: eine vergrößerte Darstellung eines Ausschnitts Z aus Figur 4A mit einer alternativen Ausgestaltung einer erfindungsgemäßen Antennenstruktur,
- Figur 6A: ein detailliertes Flussdiagramm einer Ausführungsform des erfindungsgemäßen Verfahrens zur Herstellung einer Antennenscheibe,
- Figur 6B: ein detailliertes Flussdiagramm einer Ausführungsform des erfindungsgemäßen Verfahrens zur Herstellung einer Antennenverbundscheibe.

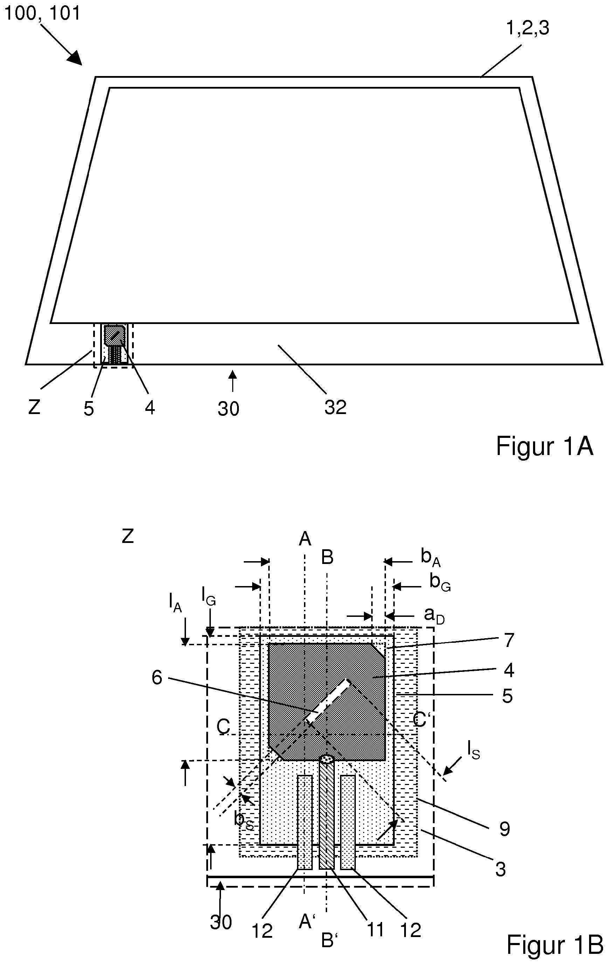

Figur 1A zeigt eine Draufsicht auf eine beispielhafte Ausgestaltung einer erfindungsgemäßen Antennenscheibe 100 am Beispiel einer Antennenverbundscheibe 101.

Figur 1B zeigt eine vergrößerte Darstellung des Ausschnitts Z der erfindungsgemäßen Antennenverbundscheibe 101 aus Figur 1A. Die Antennenverbundscheibe 101 umfasst hier beispielsweise eine Antennenscheibe 100, umfassend eine Innenscheibe 1, die über eine Zwischenschicht 3 mit einer Außenscheibe 2 verbunden ist. Die Antennenverbundscheibe 101 ist beispielsweise die Windschutzscheibe eines Personenkraftwagens. Die Abmessungen der Antennenverbundscheibe 101 betragen beispielsweise 0,9 m x 1,5 m.

Die Innenscheibe 1 ist beispielsweise dafür vorgesehen, in Einbaulage dem Innenraum zugewandt zu sein. Das heißt, die innenseitige Oberfläche IV der Innenscheibe 1 ist vom Innenraum aus zugänglich, wogegen die außenseitige Oberfläche I der Außenscheibe 2 bezüglich des Fahrzeuginnenraums nach außen weist. Innenscheibe 1 und Außenscheibe 2 bestehen beispielsweise aus Natron-Kalkglas. Die Dicke der Innenscheibe 1 beträgt beispielsweise 1,6 mm und die Dicke der Außenscheibe 2 beträgt 2,1 mm. Es versteht sich, dass Innenscheibe 1 und Außenscheibe 2 beispielsweise auch gleich dick ausgebildet sein können. Die Zwischenschicht 3 ist eine thermoplastische Zwischenschicht und besteht beispielsweise aus Polyvinylbutyral (PVB). Sie weist eine Dicke von 0,76 mm auf.

Die dargestellte Ansicht ist eine Draufsicht auf die außenseitige Oberfläche I der Außenscheibe 2 von außerhalb des Fahrzeugs aus betrachtet.

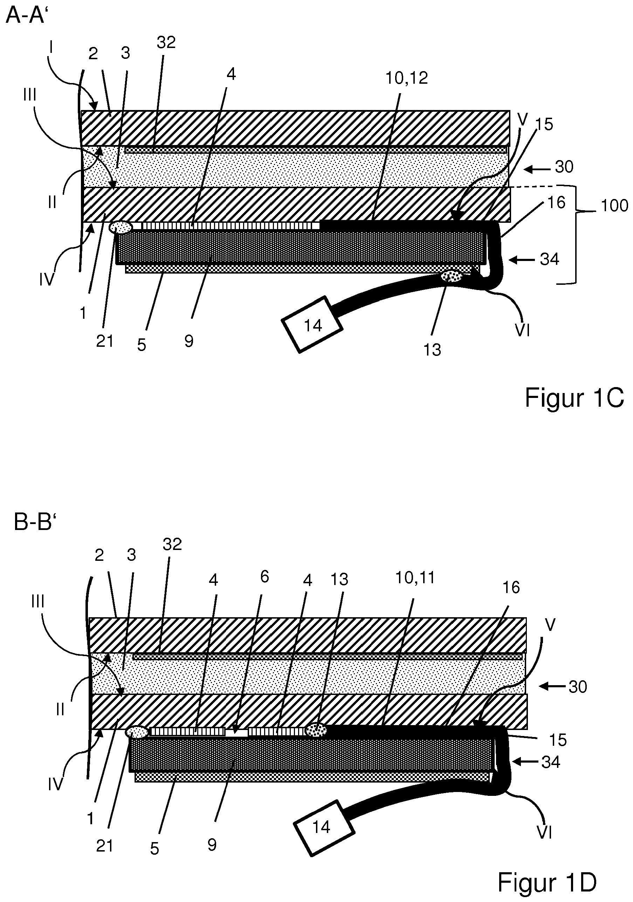

In Figur 1C ist eine Querschnittsdarstellung entlang der Schnittlinie A-A' aus Figur 1B dargestellt. Figur 1D zeigt eine dazugehörige Querschnittsdarstellung entlang der Schnittlinie B-B' aus Figur 1B.

Die Antennenstruktur 4 und die Grundplatte 5 sind am unteren Scheibenrand 30 der Antennenscheibe 100 angeordnet. Die Antennenstruktur 4 besteht in diesem Beispiel aus einer aufgedruckten und eingebrannten elektrisch leitfähigen Paste, die überwiegend aus Silberpartikeln und Glasfritten besteht. Die Antennenstruktur 4 ist auf der innenseitigen Oberfläche IV der Innenscheibe 1 angeordnet. Die Antennenstruktur 4 besteht in diesem Beispiel aus einer rechteckigen Grundfläche mit einer Länge l_{A} von 36 mm und einer Breite b_{A} von ebenfalls 34 mm. Die Grundfläche der Antennenstruktur 4 weist an zwei gegenüberliegenden Ecken jeweils eine dreiecksförmige Ausnehmung 7 auf, bei der jeweils eine der Ecken des Quadrats ausgenommen ist. Die dreiecksförmige Ausnehmung 7 ist beispielsweise ein gleichschenkliges, rechteckiges Dreieck mit einer Kathetenlänge von a_{D} = 2,5 mm. Die Antennenstruktur 4 weist zusätzlich eine schlitzförmige Ausnehmung 6 mit einer rechteckigen Form und mit einer Länge l_{S} von 9,5 mm und einer Breite b_{S} von 3 mm auf. Die schlitzförmige Ausnehmung 6 ist mit ihrer Länge entlang der Diagonalen der rechteckigen Grundfläche angeordnet, an der sich die dreiecksförmigen Ausnehmungen 7 befinden.

Ein dielektrisches Trägerelement 9 ist mit seiner außenseitigen Oberfläche V im Bereich der orthogonalen Projektion der Antennenstruktur 4 bezüglich der Innenscheibe 1 auf der innenseitigen Oberfläche IV der Innenscheibe 1 angeordnet. Das Trägerelement 9 ist hier beispielsweise plattenförmig und aus einem Vollmaterial ausgebildet. Die Dicke des Trägerelements 9 beträgt beispielsweise konstant d₉ = 2 mm. Das Trägerelement 9 enthält ein Kunststoffmaterial und hier beispielsweise Acrylnitril-Butadien-Styrol-Copolymerisat (ABS). Gleichwohl können auch Trägerelemente 9 aus beispielsweise Polybutylenterephthalat (PBT) oder Polycarbonat (PC) verwendet werden. Das Trägerelement 9 ist in seiner Grundfläche größer ausgebildet als die Antennenstruktur 4 und in einem Teilbereich des Überstands mit der Innenscheibe 1 mit einem Klebstoff 21, beispielsweise einem Polyurethan (PUR)-Klebstoff, verklebt.

Die Grundplatte 5 dient als Massefläche und ist auf der innenseitigen Oberfläche VI des Trägerelements 9, also auf der der Antennenstruktur 4 abgewandten Seite des Trägerelements 9, angeordnet. Die Grundplatte 5 ist beispielsweise eine Kupferfolie mit einer Dicke von 100 µm, die mit dem Trägerelement 9 verklebt ist. Die Grundplatte 5 hat eine rechteckförmige Grundfläche mit einer Breite b_{G} von 6 cm und einer Länge l_{G} von 13 cm. Die Grundplatte 5 überragt dabei den Bereich der orthogonalen Projektion der Antennenstruktur 4 bezüglich der Innenscheibe 1.

Die Antennenstruktur 4 ist über eine elektrische Leitungsverbindung 13 mit der Signalleitung 11 eines Folienleiters 10 verbunden. Der Folienleiter 10 ist hier beispielsweise über seine volle Länge als koplanarer Streifenleiter ausgebildet. Das heißt die plane Signalleitung 11 ist von zwei in einer Ebene zur Signalleitung 11 angeordneten planen Schirmungen 12 (auch Schirmungsleiter genannt) umgeben. Der Folienleiter 10 besteht also aus drei Innenleitern 15, nämlich der Signalleitung 11 und zwei Schirmungen 12, die beispielsweise einseitig und bevorzugt beidseitig von einer Trägerfolie umgeben sein können, die als elektrische Isolation 16 dient. Die Innenleiter 15, also die Signalleitung 11 und die Schirmungen 12 sind beispielsweise als Kupferfolie mit einer Breite von 4 mm und einer Dicke von 100 µm ausgestaltet. Die drei Innenleiter 15 des Folienleiters 10 sind in diesem Ausgestaltungsbeispiel unmittelbar auf dem Trägerelement 9 angeordnet und beispielsweise auf dem Trägerelement 9 durch Kleben befestigt, so dass keine Trägerfolie und keine elektrische Isolation 16 notwendig sind. Die Signalleitung 11 und die Schirmungen 12 des Folienleiters 10 sind von der außenseitigen Oberfläche V des Trägerelements 9 über dessen Seitenrand 34 auf die innenseitige Oberfläche VI des Trägerelements 9 geführt. Die elektrische Leitungsverbindung 13 der Signalleitung 11 mit der Antennenstruktur 4 erfolgt beispielsweise durch Klemmen beim Ankleben des Trägerelements 9 auf die Innenscheibe 1.

Die beiden Schirmungen 12 sind auf der innenseitigen Oberfläche VI des Trägerelements 9 mit der Grundplatte 5 über eine elektrische Leitungsverbindung 13 elektrisch leitend verbunden. Die elektrische Leitungsverbindung 13 ist beispielsweise ein elektrisch leitfähiger Kleber oder eine Lötstelle. Alternativ kann die elektrische Leitungsverbindung 13 durch Klemmen der Schirmungen 12 auf die Grundplatte 5 erfolgen.

Des Weiteren weist der Folienleiter 10 ein Anschlusselement 14 auf, beispielsweise einen koaxialen SMA (Sub-Miniature-A)-Stecker zur Verbindung mit einer Empfangs- oder Sendeelektronik und hier insbesondere einer GNSS-Empfangselektronik.

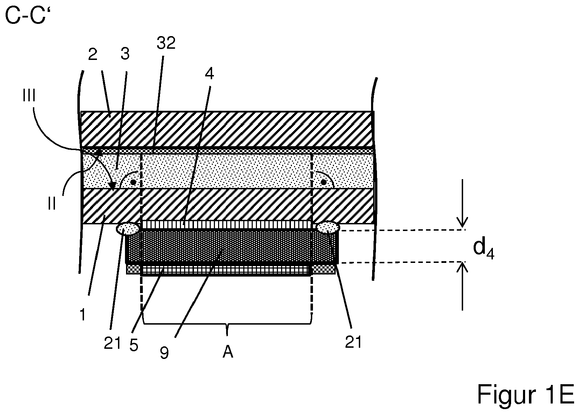

Figur 1E zeigt eine Querschnittsdarstellung entlang der Schnittlinie C-C' aus Figur 1B. Die orthogonale Projektion der Antennenstruktur 4 erstreckt sich über die Fläche A auf der innenseitigen Oberfläche IV der Innenscheibe 1. Die Grundplatte 5 überragt die Fläche A der orthogonalen Projektion der Antennenstruktur 4 vollständig.

Die im Wesentlichen rechteckige Grundfläche der Antennenstruktur 4 ist mit einer Seitenkante parallel zum Scheibenrand 30 angeordnet. Es versteht sich, dass die Seitenkante auch einen gewissen Winkel zum Scheibenrand 30 aufweisen kann, beispielsweise 45°. Die Signalleitung 11 ist an der zum Seitenrand 30 unmittelbar benachbarten Seitenkante der Antennenstruktur 4 mit der Antennenstruktur 4 verbunden. Die schlitzförmige Ausnehmung 6 und die Diagonale mit den dreiecksförmigen Ausnehmungen 7 verlaufen vom Anschlusspunkt des Signalleiters 11 aus gesehen von links unten nach rechts oben.

Die dargestellte Antennenstruktur 4 ist dazu geeignet ein rechts-zirkular polarisiertes GPS-Signal mit einer L1-Frequenz von 1575,42 MHz zu empfangen. Die dargestellte Antennenstruktur 4 ist gleichwohl dazu geeignet einen guten GLONASS-Empfang zu erzielen.

Die Antennenstruktur 4 und die Grundplatte 5 sind in einem Bereich der Antennenverbundscheibe 101 angeordnet, in dem auf der innenseitigen Oberfläche II der Außenscheibe 2 ein Abdeckdruck 32 in Form eines Schwarzdrucks angeordnet ist. Der Abdeckdruck 32 ist undurchlässig für sichtbares Licht und verhindert die Durchsicht auf die Einklebung der Antennenverbundscheibe 101 in eine Fahrzeugkarosserie beziehungsweise auf die Antennenstruktur 4 oder die Grundplatte 5. Der Abdeckdruck 32 ist durchlässig für elektromagnetische Strahlung im Frequenzbereich der Antenne, die durch die Antennenstruktur 4, das dielektrische Trägerelement 9 und die Grundplatte 5 gebildet wird. Die Wirkung der Antenne wird durch den Abdeckdruck 32 nicht oder nicht wesentlich beeinflusst.

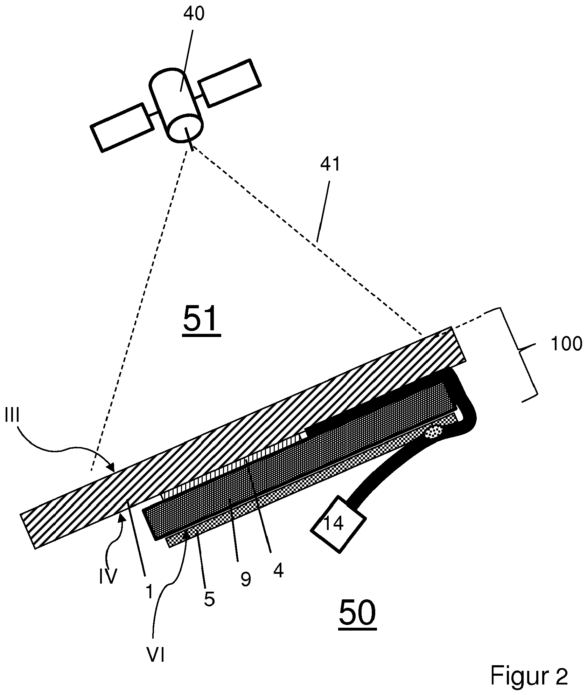

Figur 2 zeigt eine erfindungsgemäße Antennenscheibe 100 in Bezug zu dem Abstrahlbereich 41 eines Satelliten 40 zur satellitengestützten Navigation. Die Antennenscheib 100 umfasst eine Innenscheibe 1, eine Antennenstruktur 4, ein Trägerelement 9 und eine Grundplatte 5. Die Antennenscheibe 100 trennt einen Innenbereich 50, beispielsweise die Fahrgastkabine eines Fahrzeugs (hier nicht dargestellt) von einem Außenraum 51. Die Antennenstruktur 4 ist auf der innenseitigen Oberfläche IV der Innenscheibe 1 angeordnet. Die innenseitige Oberfläche IV ist die dem Satelliten 40 und damit die der Quelle des Satellitensignals abgewandte Oberfläche der Innenscheibe 1. Das Trägerelement 9 weist folglich eine außenseitige Oberfläche V auf, die in Richtung des Außenraums 51 und damit in Richtung des Signals des Satelliten 40 weist, und eine innenseitige Oberfläche VI, die dem Außenraum 51 abgewandt ist. Die Grundplatte 5 ist auf der innenseitigen Oberfläche VI des Trägerelements 9 angeordnet und damit innenraumseitig zur Antennenstruktur 4.

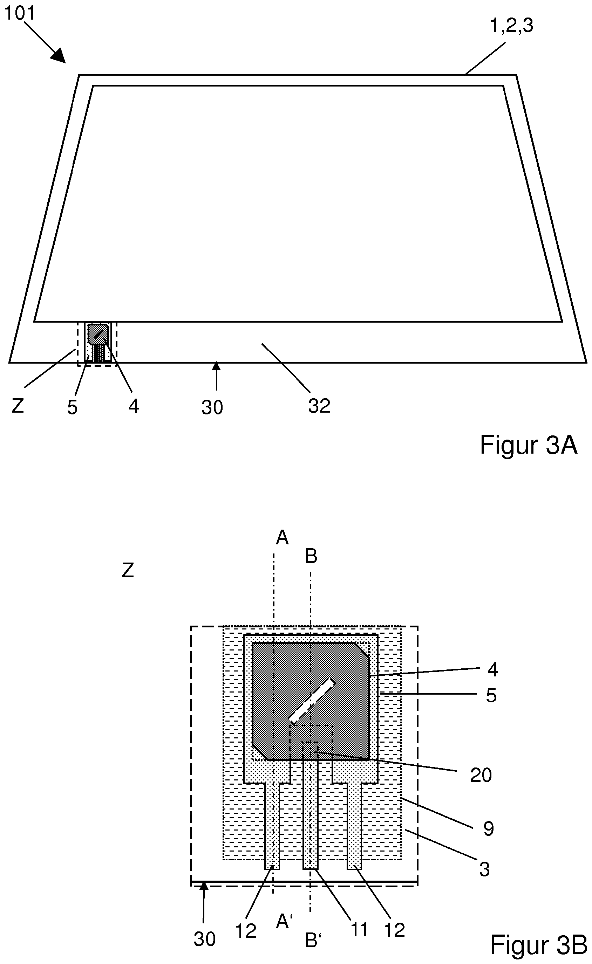

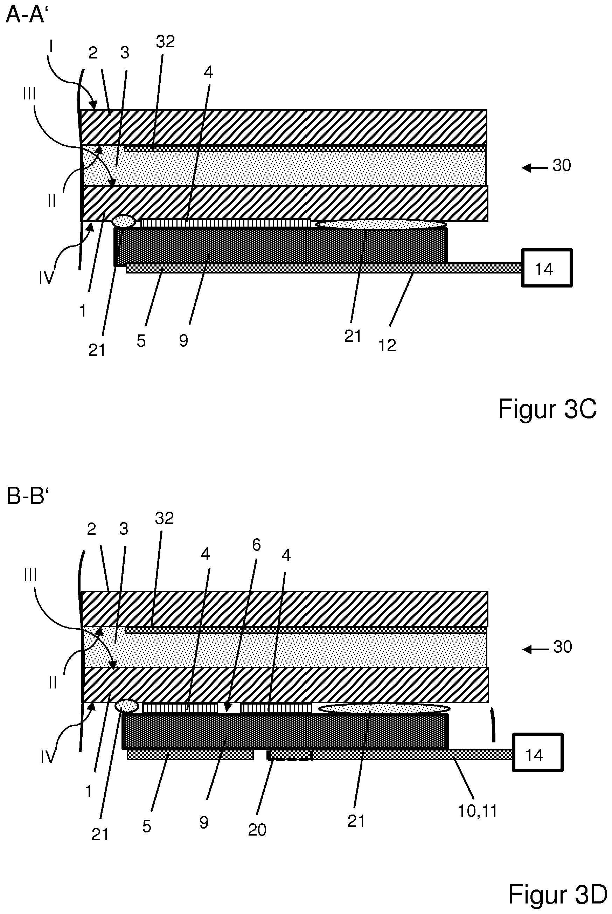

Die Figuren 3A bis 3D zeigen ein Ausgestaltungsbeispiel einer nicht erfindungsgemäßen Antennenverbundscheibe 101 nach den Figuren 1A bis 1D, wobei lediglich die elektrische Kontaktierung der Antennenstruktur 4 anders ausgestaltet ist. Wie in den Figuren 3A bis 3D dargestellt ist, ist die Signalleitung 11 in der Ebene der Grundplatte 5 und der Schirmung 12 angeordnet, wobei die Signalleitung 11 einstückig in einen kapazitiven Kopplungsbereich 20 übergeht. Die Signalleitung 11 ist dabei kapazitiv über das dazwischenliegende dielektrische Trägerelement 9 mit der Antennenstruktur 4 gekoppelt. Das Antennensignal wird über das dielektrische Trägerelement 9 mit dem kapazitiven Kopplungsbereich 20 der Signalleitung 11 gekoppelt und zum Anschlusselement 14 geleitet. Diese Ausgestaltung hat den besonderen Vorteil, dass weder die Signalleitung 11 noch die Schirmung 12 zwischen Innenscheibe 1 und Trägerelement 9 geführt werden müssen. Die komplette elektrische Kontaktierung erfolgt über die Ebene, in der die Grundplatte 5 angeordnet ist.

Diese Ausgestaltung ist besonders vorteilhaft, wenn das Trägerelement 9 ein Bereich einer Haltevorrichtung (Bracket), beispielsweise einer Sensor- oder Kameraabdeckung, ist. Derartige Haltevorrichtungen sind in der Regel viel größer als die Grundplatte 5 und die Antennenstruktur 4 ausgebildet. Die Signalleitung 11 müsste um den Rand der Haltevorrichtung geführt werden und wäre dann sehr lange. Alternativ müsste die Haltevorrichtung eine Durchbrechung aufweisen, durch die die Signalleitung 11 und eine eventuelle Schirmung 12 geführt wird. Dies ist bei der in den Figuren 3A bis 3D gezeigten kapazitiven Kopplung nicht notwendig, da die Grundplatte 5, die Signalleitung 11 und die Schirmung 12 auf der innenseitigen Oberfläche VI der Haltevorrichtung angeordnet sind. Die Haltevorrichtung kann dadurch einfacher und kompakter ausgestaltet werden.

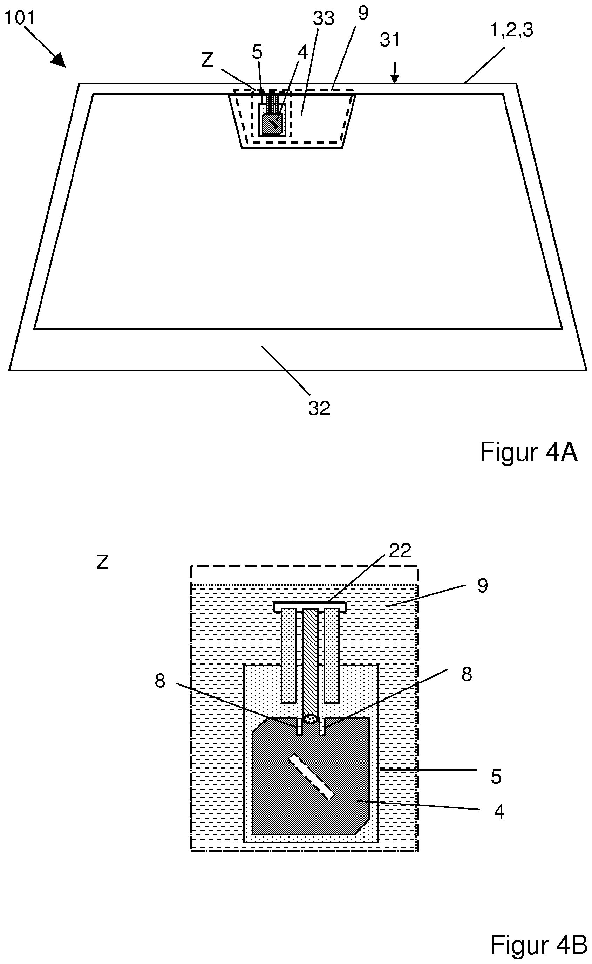

Figur 4A zeigt eine Draufsicht auf eine weitere alternative Ausgestaltung einer erfindungsgemäßen Antennenverbundscheibe 101. Figur 4B zeigt eine vergrößerte Darstellung des Ausschnitts Z aus Figur 4A.

Die Antennenverbundscheibe 101 nach Figur 4A entspricht in Material und Anordnung im Wesentlichen der Antennenverbundscheibe 101 nach Figur 1A, so dass im Folgenden nur auf die Unterschiede zwischen den Antennenverbundscheiben 101 eingegangen wird. Im Unterschied zur Figur 1A ist die Antennenstruktur 4 und die Grundplatte 5 am oberen Seitenrand 31 der Antennenverbundscheibe 101 angeordnet. Die Antennenstruktur 4 und die Grundplatte 5 sind hier in einem Bereich eines Kommunikationsfensters 33 angeordnet. Im Bereich des Kommunikationsfensters 33 sind beispielsweise weitere Sensoren wie ein Regensensor und/oder eine Kamera angeordnet (hier nicht dargestellt). Der Bereich des Kommunikationsfensters 33 wird fahrzeuginnenraumseitig durch ein Kunststoffgehäuse bedeckt (hier nicht dargestellt), innerhalb dessen bevorzugt die Kamera und/oder die Sensoren angeordnet sind. Des Weiteren weist die Antennenverbundscheibe 101 außerhalb des Bereichs des Kommunikationsfensters 33 eine elektrisch leitfähige Beschichtung auf, die dazu geeignet ist, Infrarotstrahlung zu reflektieren. Die Antennenstruktur 4 und die Grundplatte 5 entsprechen in ihren Materialien und Dimensionen der Antennenstruktur 4 und Grundplatte 5 des Ausgestaltungsbeispiels nach Figur 1A und 1B. Das Trägerelement 9 ist in diesem Beispiel eine Haltevorrichtung (Bracket), an dem über einen Einrastmechanismus das Kunststoffgehäuse befestigt werden kann. Das Trägerelement 9 ist auf die innenseitige Oberfläche IV der Innenscheibe 1 der Antennenverbundscheibe 101 geklebt.

Des Weiteren sind bei diesem Ausgestaltungsbeispiel einer erfindungsgemäßen Antennenstruktur 4 zwei rechteckförmige Ausnehmungen 8 zu beiden Seiten der elektrischen Leitungsverbindung 13 zwischen Antennenstruktur 4 und Signalleitung 11 in der Grundfläche der Antennenstruktur 4 angeordnet. Diese rechteckförmigen Ausnehmungen 8 verbessern die Auskopplung des Antennensignals aus der Antennenstruktur 4. Das Trägerelement 9 weist in diesem Beispiels eine Durchbrechung 22 auf, durch die die Signalleitung 11 und die Schirmungen 12 von der Ebene der Antennenstruktur 4 durch das Trägerelement 9 hindurch auf die Ebene der Grundplatte 5 geführt werden. Auf der Ebene der Grundplatte 5 wird die Schirmung 12 mit der Grundplatte 5 elektrisch leitend verbunden und der Streifenleiter 10, bestehend aus Signalleitung 11 und Schirmung 12, mit einem Anschlusselement 14 verbunden. Die weitere Signalführung erfolgt dann beispielsweise mit dem Kabelbaum, mit dem die weiteren Sensoren im Kunststoffgehäuse kontaktiert werden.

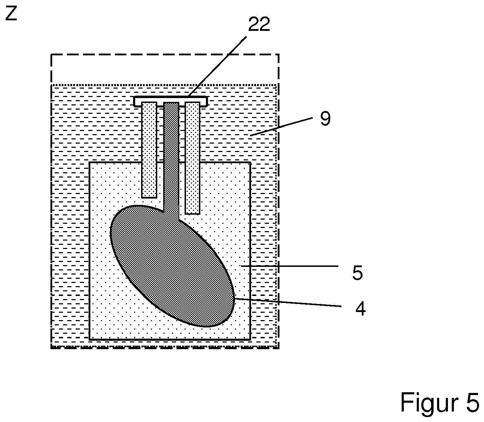

Figur 5 zeigt ein alternatives Ausgestaltungsbeispiel einer erfindungsgemäßen Antennenverbundscheibe 101 nach Figur 4A und 4B, wobei lediglich die Grundfläche der Antennenstruktur 4 eine andere Form als in Figur 4A und 4B aufweist. Die Grundfläche ist hier eine Ellipse, wobei die Signalleitung 11 unter einem Winkel von beispielsweise 45° zu den Haupt- beziehungsweise Nebenachsen angeordnet ist. Die Länge l_{A} der Grundfläche der Antennenstruktur 4 entspricht in diesem Beispiel dem maximalen Durchmesser der Ellipse, also dem Durchmesser in Richtung der Hauptachse. Die Breite b_{A} entspricht in diesem Beispiel dem minimalen Durchmesser der Ellipse.

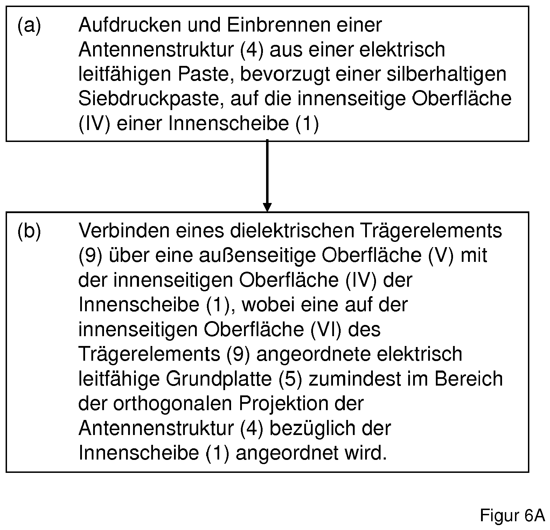

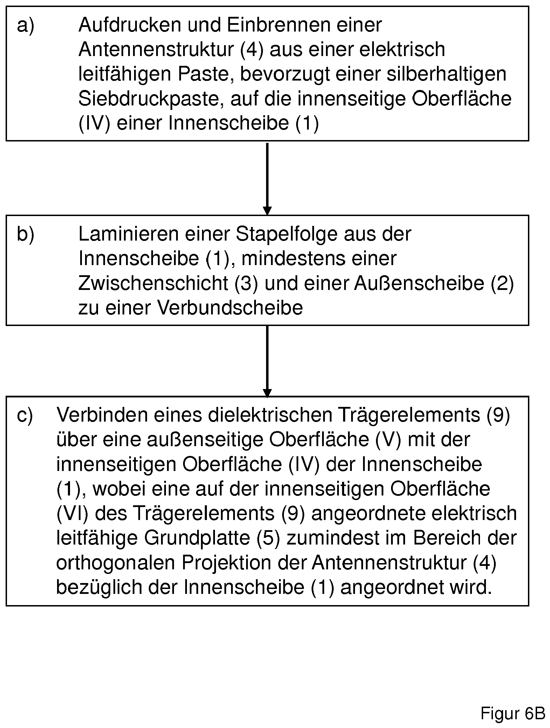

Figur 6A zeigt ein Flussdiagramm eines Ausführungsbeispiels des erfindungsgemäßen Verfahrens zur Herstellung einer erfindungsgemäßen Antennenscheibe 100.

Figur 6B zeigt ein Flussdiagramm eines Ausführungsbeispiels des erfindungsgemäßen Verfahrens zur Herstellung einer erfindungsgemäßen Antennenverbundscheibe 101.

Zusammenfassend besteht die vorliegende Erfindung darin, eine verbesserte Antennenscheibe bereitzustellen, in der eine Antenne und insbesondere eine GNSS-Antenne einfach und kostengünstig integriert werden kann. Dieses Ergebnis war für den Fachmann unerwartet und überraschend.

### Bezugszeichenliste

- 1: Innenscheibe
- 2: Außenscheibe
- 3: Zwischenschicht
- 4: Antennenstruktur
- 5: Grundplatte
- 6: schlitzförmige Ausnehmung
- 7: dreiecksförmige Ausnehmung
- 8: rechteckförmige Ausnehmung
- 9: Trägerelement
- 10: koplanarer Streifenleiter, Streifenleiter, Folienleiter
- 11: Signalleitung
- 12: Schirmung
- 13: elektrische Leitungsverbindung
- 14: Anschlusselement
- 15: Innenleiter
- 16: elektrische Isolation
- 20: kapazitiver Kopplungsbereich
- 21: Klebestelle
- 22: Durchbrechung
- 30, 31: Scheibenrand
- 32: Abdeckdruck
- 33: Kommunikationsfenster
- 34: Seitenrand des Trägerelements 9
- 40: Satellit
- 41: Abstrahlbereich des Satelliten 40
- 50: Innenraum
- 51: Außenraum
- 100: Antennenscheibe
- 101: Antennenverbundscheibe
- A: Fläche der orthogonalen Projektion der Antennenstruktur 4
- a_{D}: Kathetenlänge der dreiecksförmigen Ausnehmung 7
- b_{A}: Breite der Antennenstruktur 4
- b_{G}: Breite der Grundplatte 5
- b_{S}: Breite der schlitzförmigen Ausnehmung 6
- d₉: Dicke des Trägerelements 9
- ε_{r,1/2}: relative Permittivität der Innenscheibe 1 oder Außenscheibe 2
- ε_{r,3}: relative Permittivität der Zwischenschicht 3
- l_{A}: Länge der Antennenstruktur 4
- l_{G}: Länge der Grundplatte 5
- l_{S}: Länge der schlitzförmigen Ausnehmung 6
- A-A': Schnittlinie
- B-B': Schnittlinie
- C-C': Schnittlinie
- Z: Ausschnitt
- I: außenseitige Oberfläche der Außenscheibe 2
- II: innenseitige Oberfläche der Außenscheibe 2
- III: außenseitigen Oberfläche der Innenscheibe 1
- IV: innenseitigen Oberfläche der Innenscheibe 1
- V: außenseitige Oberfläche des Trägerelements 9
- VI: innenseitige Oberfläche des Trägerelements 9

## Patentansprüche

1. Antennenscheibe (100) mindestens umfassend:
- eine Innenscheibe (1) mit einer innenseitigen Oberfläche (IV),
- eine Antennenstruktur (4), hergestellt aus einer elektrisch leitfähigen Paste, die auf der innenseitigen Oberfläche (IV) der Innenscheibe (1) aufgedruckt und eingebrannt ist,
- ein dielektrisches Trägerelement (9), das über eine außenseitige Oberfläche (V) mit der innenseitigen Oberfläche (IV) der Innenscheibe (1) verbunden ist und auf einer innenseitigen Oberfläche (VI) eine elektrisch leitfähige Grundplatte (5) aufweist,
wobei
- die Grundplatte (5) zumindest im Bereich der orthogonalen Projektion der Antennenstruktur (4) bezüglich der Innenscheibe (1) angeordnet ist, **dadurch gekennzeichnet dass**
- die Antennenstruktur (4) mit einer Signalleitung (11) eines koplanaren Streifenleiters (10) elektrisch leitend, bevorzugt galvanisch, verbunden ist und der Streifenleiter um den Seitenrand (34) des Trägerelements (9) auf dessen innenseitige Oberfläche (VI) geführt ist und die Schirmung (12) des Streifenleiters (10) mit der Grundplatte (5) elektrisch, bevorzugt galvanisch, verbunden ist.

2. Antennenscheibe (100) nach Anspruch 1, wobei die Grundplatte (5)
- eine gedruckte und eingebrannte elektrisch leitfähige Paste, bevorzugt eine silberhaltige Siebdruckpaste, oder
- eine elektrisch leitfähige Folie, bevorzugt eine Metallfolie und insbesondere eine Kupfer-, Silber-, Gold- oder Aluminiumfolie, enthält oder daraus besteht.

3. Antennenscheibe (100) nach einem der Ansprüche 1 oder 2, wobei die gedruckte und eingebrannte elektrisch leitfähige Paste eine Dicke von 3 µm bis 20 µm und einen Flächenwiderstand von 0,001 Ohm/Quadrat bis 0,03 Ohm/Quadrat, bevorzugt von 0,002 Ohm/Quadrat bis 0,018 Ohm/Quadrat, aufweist.

4. Antennenscheibe (100) nach Anspruch 2, wobei die elektrisch leitfähige Folie eine Dicke von 50 µm bis 1000 µm, bevorzugt von 100 µm bis 600 µm und eine Leitfähigkeit von 1*10⁶ S/m bis 10*10⁷ S/m, bevorzugt von 3,5*10⁷ S/m bis 6,5*10⁷ S/m, aufweist.

5. Antennenscheibe (100) nach einem der Ansprüche 1 bis 4, wobei das Trägerelement (9) auf die Innenscheibe (1) geklebt ist und dadurch ein Ende der Signalleitung (11) des Streifenleiters (10) über einen Presskontakt mit der Antennenstruktur (4) verbunden ist.

6. Antennenscheibe (100) nach Anspruch 5, wobei die Signalleitung (11), die Grundplatte (5) und die Schirmung (12) einstückig ausgebildet sind.

7. Antennenscheibe (100) nach einem der Ansprüche 1 bis 6, wobei die Grundplatte (5), die Signalleitung (11) und/oder die Schirmung (12) auf einer Trägerfolie angeordnet sind und die Trägerfolie bevorzugt Polyimid oder Polyethylenterephthalat (PET) enthält oder daraus besteht, und die Trägerfolie bevorzugt eine relative Permittivität von 2 bis 4 und besonders bevorzugt von 2,7 bis 3,3 aufweist.

8. Antennenscheibe (100) nach einem der Ansprüche 1 bis 7, wobei das Trägerelement (9) eine Kunststoffplatte, bevorzugt die Halteplatte einer Abdeckung ist und bevorzugt aus Polycarbonat, Acrylnitril-Butadien-Styrol-Copolymerisat (ABS), Polyethylen (PE), Polypropylen (PP), Polyvinylchlorid (PVC), Polystyrol (PS), Polybutylenterephthalat (PBT), Polyamid oder Polyethylenterephthalat (PET) besteht.

9. Antennenverbundscheibe (101) umfassend eine Antennenscheibe (100) nach einem der Ansprüche 1 bis 8, wobei eine außenseitige Oberfläche (III) der Innenscheibe (1) über eine Zwischenschicht (3) mit einer innenseitigen Oberfläche (II) einer Außenscheibe (2) verbunden ist.

10. Antennenverbundscheibe (101) nach Anspruch 9, wobei die Innenscheibe (1) und/oder die Außenscheibe (2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält, und/oder eine relative Permittivität ε_{r,1/4} von 2 bis 8 und besonders bevorzugt von 6 bis 8 aufweist.

11. Antennenscheibenanordnung umfassend:
- eine Antennenscheibe (100) nach einem der Ansprüche 1 bis 8 oder eine Antennenverbundscheibe (100) nach einem der Ansprüche 9 oder 10,
- eine Empfangs- oder Sendeelektronik, die mit der Antennenstruktur (4) und der Grundplatte (5) elektrisch gekoppelt ist,
wobei die Antennenscheibe (100) oder die Antennenverbundscheibe (101) als Verglasung in einer Fahrzeugkarosserie angeordnet ist.

12. Verfahren zur Herstellung einer Antennenscheibe (100) nach einem der Ansprüche 1 bis 8, wobei zumindest:
(a) eine Antennenstruktur (4) aus einer elektrisch leitfähigen Paste, bevorzugt einer silberhaltigen Siebedruckpaste, auf die innenseitige Oberfläche (IV) einer Innenscheibe (1) aufgedruckt und eingebrannt wird,
(b) ein dielektrisches Trägerelement (9) über eine außenseitige Oberfläche (V) mit der innenseitigen Oberfläche (IV) der Innenscheibe 1 verbunden wird, wobei eine auf einer innenseitigen Oberfläche (VI) des Trägerelements (9) angeordnete elektrisch leitfähige Grundplatte (5) zumindest im Bereich der orthogonalen Projektion der Antennenstruktur (4) bezüglich der Innenscheibe (1) angeordnet wird.

13. Verfahren zur Herstellung einer Antennenscheibe (100) nach Anspruch 12, wobei das Trägerelement (9) durch Verkleben mit einem Klebestoff (21) mit der Innenscheibe (1) verbunden wird.

14. Verwendung der Antennenscheibe (100) nach einen der Ansprüche 1 bis 8 oder der Antennenverbundscheibe (101) nach einem der Ansprüche 9 oder 10 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe, in Möbeln oder in Gebäuden.

15. Verwendung der Antennenscheibe (100) nach einen der Ansprüche 1 bis 8 oder der Antennenverbundscheibe (101) nach einem der Ansprüche 9 oder 10 zum Empfang von Signalen zur satellitengestützten Navigation, insbesondere zum Empfang eines rechts-zirkular polarisierten GPS-Signals mit einer L1-Frequenz von 1575,42 MHz und/oder eines GLONASS-Signals mit einer Frequenz von 1602 MHz + 4 Mhz.

## Claims

1. Antenna pane (100) at least comprising:
- an inner pane (1) having an interior-side surface (IV),
- an antenna structure (4) made of an electrically conductive paste printed and fired on the interior-side surface (IV) of the inner pane (1),
- a dielectric carrier element (9) that is connected to the interior-side surface (IV) of the inner pane (1) via an exterior-side surface (V) and has an electrically conductive base plate (5) on an interior-side surface (VI),
wherein
- the base plate (5) is arranged at least in the region of the orthogonal projection of the antenna structure (4) relative to the inner pane (1)
**characterized in that**
- the antenna structure (4) is connected electrically conductively, preferably galvanically, to a signal line (11) of a coplanar strip conductor (10), and the strip conductor is guided around the side edge (34) of the carrier element (9) on its interior-side surface (VI) and the shield (12) of the strip conductor (10) is electrically, preferably galvanically, connected to the base plate (5).

2. Antenna pane (100) according to claim 1, wherein the base plate (5) contains or is made of
- a printed and fired electrically conductive paste, preferably a silver-containing screen printing paste, or
- an electrically conductive foil, preferably a metal foil, and in particular a copper, silver, gold, or aluminum foil.

3. Antenna pane (100) according to one of claims 1 or 2, wherein the printed and fired electrically conductive paste has a thickness of 3 µm to 20 µm and sheet resistance of 0.001 ohm/square to 0.03 ohm/square, preferably of 0.002 ohm/square to 0.018 ohm/square.

4. Antenna pane (100) according to claim 2, wherein the electrically conductive foil has a thickness of 50 µm to 1000 µm, preferably of 100 µm to 600 µm and conductivity of 1*10⁶ S/m to 10*10⁷ S/m, preferably of 3.5*10⁷ S/m to 6.5*10⁷ S/m.

5. Antenna pane (100) according to one of claims 1 through 4, wherein the carrier element (9) is glued onto the inner pane (1) and thus one end of the signal line (11) of the strip conductor (10) is connected to the antenna structure (4) via a pressure contact.

6. Antenna pane (100) according to claim 5, wherein the signal line (11), the base plate (5), and the shield (12) are implemented in one piece.

7. Antenna pane (100) according to one of claims 1 through 6, wherein the base plate (5), the signal line (11), and/or the shield (12) are arranged on a carrier film and the carrier film preferably contains or is made of polyimide or polyethylene terephthalate (PET), and the carrier film preferably has relative permittivity of 2 to 4 and particularly preferably of 2.7 to 3.3.

8. Antenna pane (100) according to one of claims 1 through 7, wherein the carrier element (9) is a plastic plate, preferably the mounting plate of a cover and is preferably made of polycarbonate, acrylonitrile butadiene styrene copolymer (ABS), polyethylene (PE), polypropylene (PP), polyvinyl chloride (PVC), polystyrene (PS), polybutylene terephthalate (PBT), polyamide, or polyethylene terephthalate (PET).

9. Antenna composite pane (101) comprising an antenna pane (100) according to one of claims 1 through 8, wherein an exterior-side surface (III) of the inner pane (1) is bonded via an intermediate layer (3) to an interior-side surface (II) of an outer pane (2).

10. Antenna composite pane (101) according to one of claim 9, wherein the inner pane (1) and/or the outer pane (2) contains glass, preferably flat glass, float glass, quartz glass, borosilicate glass, soda lime glass, or polymers, preferably polyethylene, polypropylene, polycarbonate, polymethyl methacrylate, and/or mixtures thereof, and/or has relative permittivity ε_{r,1/4} of 2 to 8 and particularly preferably of 6 to 8.

11. Antenna pane arrangement comprising:
- an antenna pane (100) according to one of claims 1 through 8 or an antenna composite pane (100) according to one of claims 9 or 10,
- receiving or transmitting electronics that are electrically coupled to the antenna structure (4) and the base plate (5),
wherein the antenna pane (100) or the antenna composite pane (101) is arranged as glazing in a vehicle body.

12. Method for producing an antenna pane (100) according to one of claims 1 through 8, wherein at least:
(a) an antenna structure (4) made of an electrically conductive paste, preferably a silver-containing screen printing paste, is printed and fired on the interior-side surface (IV) of an inner pane (1),
(b) a dielectric carrier element (9) is connected to the interior-side surface (IV) of the inner pane 1 via an exterior-side surface (V), wherein an electrically conductive base plate (5) arranged on an interior-side surface (VI) of the carrier element (9) is arranged at least in the region of the orthogonal projection of the antenna structure (4) relative to the inner pane (1).

13. Method for producing an antenna pane (100) according to claim 12, wherein the carrier element (9) is bonded to the inner pane (1) by gluing with an adhesive (21).

14. Use of the antenna pane (100) according to one of claims 1 through 8 or the antenna composite pane (101) according to one of claims 9 or 10, in means of transportation for travel on land, in the air, or on water, in particular in motor vehicles, for example, as a windshield, rear window, side windows, and/or roof panel, in furniture or in buildings.

15. Use of the antenna pane (100) according to one of claims 1 through 8 or the antenna composite pane (101) according to one of claims 9 or 10, for reception of signals for satellite-supported navigation, in particular for reception of a right circularly polarized GPS signal with an L1 frequency of 1575.42 MHz and/or a GLONASS signal with a frequency of 1602 MHz ± 4 Mhz.

## Revendications

1. Vitrage à antenne (100) comportant au moins :
- une vitre intérieure (1) ayant une surface côté intérieur (IV) ;
- une structure d'antenne (4), obtenue à partir d'une pâte conductrice de l'électricité, qui est imprimée et cuite sur la surface côté intérieur (IV) de la vitre intérieure (1) ;
- un élément de support diélectrique (9), qui est relié à la surface côté intérieur (IV) de la vitre intérieure (1) par une surface côté extérieur (V) et présente une plaque de base (5) conductrice de l'électricité sur une surface côté intérieur (VI),
dans lequel
- la plaque de base (5) est disposée au moins dans la région de la projection orthogonale de la structure d'antenne (4) par rapport à la vitre intérieure (1), **caractérisé par le fait que**
- la structure d'antenne (4) est connectée de façon conductrice de l'électricité, de préférence galvaniquement, à une ligne de signal (11) d'un conducteur en ruban coplanaire (10) et le conducteur en ruban est guidé autour du bord latéral (34) de l'élément de support (9) sur sa surface côté intérieur (VI) et le blindage (12) du conducteur en ruban (10) est connecté électriquement, de préférence galvaniquement, à la plaque de base (5).

2. Vitrage à antenne (100) selon la revendication 1, dans lequel la plaque de base (5) contient ou est constituée par :
- une pâte conductrice de l'électricité, imprimée et cuite, de préférence une pâte de sérigraphie à teneur en argent ; ou
- une feuille conductrice de l'électricité, de préférence une feuille métallique et en particulier une feuille de cuivre, d'argent, d'or ou d'aluminium.

3. Vitrage à antenne (100) selon l'une des revendications 1 ou 2, dans lequel la pâte conductrice de l'électricité, imprimée et cuite, présente une épaisseur de 3 µm à 20 µm et une résistance par carré de 0,001 Ohm/carré à 0,03 Ohm/carré, de préférence de 0,002 Ohm/carré à 0,018 Ohm/carré.

4. Vitrage à antenne (100) selon la revendication 2, dans lequel la feuille conductrice de l'électricité présente une épaisseur de 50 µm à 1000 µm, de préférence 100 µm à 600 µm, et une conductivité de 1*10⁶ S/m à 10*10⁷ S/m, de préférence de 3,5*10⁷ S/m à 6,5*10⁷ S/m.

5. Vitrage à antenne (100) selon l'une des revendications 1 à 4, dans lequel l'élément de support (9) est collé à la vitre intérieure (1) et par là une extrémité de la ligne de signal (11) du conducteur en ruban (10) est connectée à la structure d'antenne (4) par un contact de pression.

6. Vitrage à antenne (100) selon la revendication 5, dans lequel la ligne de signal (11), la plaque de base (5) et le blindage (12) sont formés d'un seul tenant.

7. Vitrage à antenne (100) selon l'une des revendications 1 à 6, dans lequel la plaque de base (5), la ligne de signal (11) et/ou le blindage (12) sont disposés sur une feuille de support et la feuille de support contient, de préférence, du polyimide ou du poly(téréphtalate d'éthylène) (PET) ou en est constituée, et la feuille de support présente, de préférence, une permittivité relative de 2 à 4 et de façon particulièrement préférée de 2,7 à 3,3.

8. Vitrage à antenne (100) selon l'une des revendications 1 à 7, dans lequel l'élément de support (9) est une plaque en matière plastique, de préférence la plaque de montage d'un couvercle et, de préférence, est constitué de polycarbonate, de copolymère acrylonitrile-butadiène-styrène (ABS), de polyéthylène (PE), de polypropylène (PP), de poly(chlorure de vinyle) (PVC), de polystyrène (PS), de poly(téréphtalate de butylène) (PBT), de polyamide ou de poly(téréphtalate d'éthylène) (PET).

9. Vitrage composite à antenne (101) comportant un vitrage à antenne (100) selon l'une des revendications 1 à 8, dans lequel une surface côté extérieur (III) de la vitre intérieure (1) est reliée à une surface côté intérieur (II) d'une vitre extérieure (2) par une couche intermédiaire (3).

10. Vitrage composite à antenne (101) selon la revendication 9, dans lequel la vitre intérieure (1) et/ou la vitre extérieure (2) contiennent du verre, de préférence du verre plat, du verre flotté, du verre de quartz, du verre borosilicaté, du verre sodocalcique ou des polymères, de préférence du polyéthylène, du polypropylène, du polycarbonate, du poly(méthacrylate de méthyle) et/ou des mélanges de ceux-ci, et/ou présente une permittivité relative ε_{r1/4} de 2 à 8 et de façon particulièrement préférée de 6 à 8.

11. Ensemble vitrage à antenne comportant :
- un vitrage à antenne (100) selon l'une des revendications 1 à 8 ou un vitrage composite à antenne (100) selon l'une des revendications 9 ou 10 ;
- une électronique de réception ou d'émission, qui est couplée électriquement à la structure d'antenne (4) et à la plaque de base (5),
le vitrage à antenne (100) ou le vitrage composite à antenne (101) étant disposés en tant que vitrage dans une carrosserie de véhicule.

12. Procédé de fabrication d'un vitrage à antenne (100) selon l'une des revendications 1 à 8, dans lequel au moins :
(a) une structure d'antenne (4) constituée d'une pâte conductrice de l'électricité, de préférence une pâte de sérigraphie à teneur en argent, est imprimée et cuite sur la surface côté intérieur (IV) d'une vitre intérieure (1) ;
(b) un élément de support diélectrique (9) est relié à la surface côté intérieur (IV) de la vitre intérieure (1) par une surface côté extérieur (V), une plaque de base (5) conductrice de l'électricité, disposée sur une surface côté intérieur (VI) de l'élément de support (9), étant disposée au moins dans la région de la projection orthogonale de la structure d'antenne (4) par rapport à la vitre intérieure (1).

13. Procédé de fabrication d'un vitrage à antenne (100) selon la revendication 12, dans lequel l'élément de support (9) est relié à la vitre intérieure (1) par collage avec un adhésif (21).

14. Utilisation du vitrage à antenne (100) selon l'une des revendications 1 à 8 ou du vitrage composite à antenne (101) selon l'une des revendications 9 ou 10 dans des moyens de locomotion pour le transport sur terre, dans les airs ou dans l'eau, en particulier dans des véhicules automobiles, par exemple en tant que pare-brise, vitre arrière, vitres latérales et/ou vitre de toit, dans des meubles ou dans des bâtiments.

15. Utilisation du vitrage à antenne (100) selon l'une des revendications 1 à 8 ou du vitrage composite à antenne (101) selon l'une des revendications 9 ou 10 pour la réception de signaux pour la navigation par satellite, en particulier pour la réception d'un signal GPS à polarisation circulaire droite avec une fréquence L1 de 1575,42 MHz et/ou d'un signal GLONASS avec une fréquence de 1602 MHz ± 4 MHz.
